# EUROPÄISCHE PATENTSCHRIFT

(11) **EP 3 162 776 B1**
(45) Veröffentlichungstag und Bekanntmachung des Hinweises auf die Patenterteilung: **30.09.2020**
(21) Anmeldenummer: 16195520.8
(22) Anmeldetag: 25.10.2016
(51) Int. Cl.: C04B 28/04, C09K 8/467

(54) **ZEMENTMÖRTELZUSAMMENSETZUNGEN FÜR OFFSHORE-BAUWERKE**
CEMENT MORTAR COMPOSITIONS FOR OFFSHORE CONSTRUCTION
COMPOSITIONS DE MORTIER POUR OUVRAGES EN MER

(30) Priorität: 26.10.2015 DE 102015220898
(43) Veröffentlichungstag der Anmeldung: 03.05.2017
(73) Patentinhaber: innogy SE, 45128 Essen (DE)
(72) Erfinder: DAUM, Karlheinz, 67133 Maxdorf (DE)
(74) Vertreter: Richly & Ritschel Patentanwälte PartG mbB

(56) Entgegenhaltungen:
- US-A- 5 571 318
- US-A1- 2012 234 541

## Beschreibung

Die vorliegende Erfindung betrifft Zementmörtelzusammensetzungen und deren Verwendung für das Vergießen von unter der Wasseroberfläche befindlichen Hohlräumen, sowie zur Wärmeisolation.

Der Gründung von Offshore-Bauwerken kommt eine immer höher werdende Bedeutung zu. Dies gilt insbesondere für sogenannte Offshore-Windkraftanlagen, die häufig zu sogenannten Hochsee-Windparks zusammengefasst werden. Solche Offshore-Standorte bieten zahlreiche Vorteile, beispielsweise kontinuierliche Windbedingungen, sowie überdurchschnittlich hohe Windgeschwindigkeiten.

Durch diese Bedingungen, weiterhin jedoch auch das auf die Bauwerke wirkende eigene Gewicht, sowie die Wasserströmung, werden jedoch auch besondere Anforderungen an die Offshore-Bauwerke erforderlich, um deren langfristige Standsicherheit zu gewährleisten. Hierfür sind im Stand der Technik verschiedene Gründungsmöglichkeiten für die Offshore-Bauwerke bekannt. Neben der Flachgründung, sowie den Schwerkraft-Fundamenten, seien insbesondere die Monopile- (1 Pfahl), die Tripod-, oder Tripile- (jeweils 3 Pfähle), sowie die Jacket-Gründung (4 Pfähle) genannt.

Bei solchen Pfahlgründungen werden üblicherweise ein oder mehrere Gründungspfähle in den Meeresgrund gerammt oder eingespült. Diese Pfähle sind häufig als Hohlpfähle aus Stahl ausgebildet, die über eine vorgegebene Länge in den Meeresuntergrund verbracht werden. Auf diese Pfähle wird dann die Unterwasserstruktur beziehungsweise die Verankerungsstruktur des Offshore-Bauwerks, beispielsweise in Form eines Jacket-Fundaments, aufgesetzt.

Die hierbei entstehenden Hohlräume, üblicherweise Ringräume, werden hiernach üblicherweise "vergroutet", das heißt mittels einer hydraulisch abbindenden Vergussmasse verbunden. Als Vergussmassen (grout) finden derzeit hochviskose Polymerbetone Anwendung, die nach deren Aushärten Kräfte zwischen den einander umschließenden Teilen der Bauelemente übertragen.

Eine Unterwasserstruktur eines Offshore-Bauwerks sowie ein Gründungsverfahren sind beispielsweise aus der WO 2011/010937 A1 bekannt.

Nachteilig an der Verwendung solcher derzeit verwendeten Vergussmassen ist zum einen der hohe Preis für die polymeren Hochleistungsbetone. Weiterhin erfordert der Einsatz solcher Polymerbetone zwingend die Verwendung von reinem Wasser in genau spezifizierte Menge und bei genau spezifizierter Temperatur, um die Polymerbetone anzusetzen. Insbesondere vor dem Hintergrund der für eine Pfahlgründung großen erforderlichen Volumina bedeutet dies, dass eine große Menge an reinem Wasser mitzuführen ist, sowie Vorrichtungen vorgehalten werden müssen, um dieses zu temperieren.

Der Austausch des teuren Polymerzements durch einen preiswerteren, "gewöhnlichen" Zement, wie beispielsweise Portlandzement, führte bisher nicht zu einem reproduzierbaren Erfolg und erwies sich als ungeeignet, da hierbei durch die starke exotherme Reaktion, die durch das Eindringen von, bzw. die Reaktion mit, von Salzwasser noch verstärkt wird, hohe Temperaturen von 150-180 °C erzeugt werden. Als Folge dessen ergibt sich ein großer Temperaturgradient zwischen dem mit dem Zementmörtel gefüllten Ringraum der Pfahlgründung und der umgebenden Wasserumgebung (Meerwasser), die häufig nur eine Temperatur von 4-6 °C aufweist. Hierdurch kommt es zu hohen thermischen Spannungen in der Vergussmasse, die letztlich zu einer Beschädigung, wie Rissen, führen kann.

US 5 571 318 A und US 2012/234541 A1 offenbaren Zementmörtel.

Der vorliegenden Erfindung liegt die Aufgabe zugrunde, einen Zementmörtel für das Vergießen von unter der Wasseroberfläche befindlichen Hohlräumen bereitzustellen, der zum einen preiswerter als die derzeit als Vergussmasse zwingend verwendeten Polymerbetone ist und zum anderen nicht auf die Verwendung von reinem, temperierten Wasser angewiesen ist.

Diese Aufgabe wird erfindungsgemäß durch einen Zementmörtel mit den in Anspruch 1 angegebenen Merkmalen gelöst. Vorteilhafte Ausgestaltungen sind in dessen Unteransprüchen angegeben. Ebenfalls Gegenstand der vorliegenden Erfindung ist die Verwendung eines solchen Zementmörtels für das Vergießen von unter der Wasseroberfläche befindlichen Hohlräumen, sowie zur Wärmeisolation. Weiterhin ist Gegenstand der vorliegenden Erfindung ein Verfahren wie im Anspruch 9 beschrieben.

Der vorliegenden Erfindung basiert auf der überraschenden Entdeckung, dass ein Zementmörtel aus einem Zement, Anmachwasser, sowie einem siliziumhaltigen Zuschlagstoff hergestellt werden kann, der für das Vergießen von unter der Wasseroberfläche befindlichen Hohlräumen geeignet ist, falls als Anmachwasser Salzwasser gewählt wird. Bei einer solchen Zementmörtelzusammensetzung zeigte sich, dass die zuvor beschriebenen thermischen Spannungen zwischen der Vergussmassen und der umgebenden Wasserumgebung der Art reduziert werden konnten, dass keinerlei Beschädigungen der Vergussmassen durch beispielsweise Risse auftraten und somit Offshore-Bauwerke mit der gewünschten Standsicherheit aufgebaut werden konnten. Weiter vorteilhaft kann nun ein Zementmörtel im Sinne der vorliegenden Erfindung bereitgestellt werden, der weder von der Verwendung von teurem Hochleistung-Polymerbeton, noch temperiertem Klarwasser abhängig ist. Dementsprechend kann zum Herstellen des erfindungsgemäßen Zementmörtels insbesondere das nicht aktiv temperierte und im Regelfall salzhaltige Umgebungswasser (Meerwasser) eingesetzt werden.

Weiterhin wurde festgestellt, dass der erfindungsgemäße Zementmörtel eine deutlich reduzierte Blasenbildung bei dessen Anmachen, bzw. Aushärten aufweist. Teilweise konnte sogar eine vollständige Vermeidung der Blasenbildung erreicht werden. Insbesondere die blasenfreie Aushärtung des Zementmörtels ist von entscheidendem Vorteil.

Weiterhin kann die maximale Temperatur beim Anmachen des erfindungsgemäßen Zementmörtels reduziert werden, was vorteilhafterweise zum einen dessen Pumpbarkeit verbessert, da das Aushärten verlangsamt wird und ein Aushärten während des Pumpens vermieden oder reduziert wird. Insbesondere kann der erfindungsgemäße Zementmörtel kalt Angemacht werden, wobei - aufgrund der erfindungsgemäß möglichen Verwendung von Meerwasser - ein Zusetzen von Kühlmitteln, wie beispielsweise Eiswasser, überflüssig wird.

Weiterhin ermöglicht der erfindungsgemäße Zementmörtel verbesserte Fließeigenschaften bei steigendem Füllen in die Groutverbindung (Kamineffekt), sowie eine reduzierte Verwässerung der oberen Betonlage in der Verbindung.

Unter dem Begriff "Zementmörtel" im Sinne der vorliegenden Erfindung wird ein Baustoff verstanden, der aus dem Bindemittel Zement, Anmachwasser (auch Zugabe Wasser genannt) und einem siliziumhaltigen Zuschlagstoff besteht. Eine solche Zementmörtelzusammensetzung wird auf dem Gebiet der Offshore-Bauwerke auch mit dem Begriff "Grout" bezeichnet und kann als eine unter Wasser hydraulisch abbindende Vergussmasse bezeichnet werden.

Aufgrund der Eigenschaften des Zementmörtels der vorliegenden Erfindung ist dieser geeignet für das Vergießen von unter der Wasseroberfläche befindlichen Hohlräumen. Bei diesen Hohlräumen handelt es sich vorzugsweise um Hohlräume, die in der Gründungsstruktur eines Offshore-Bauwerks angeordnet sind. Weiter vorzugsweise handelt es sich um Ringräume in solchen Gründungsstrukturen, insbesondere solchen, die bei der Pfahlgründung des Offshore-Bauwerks entstehen.

Unter dem Begriff "unter der Wasseroberfläche" im Sinne der vorliegenden Erfindung soll verstanden werden, dass das Vergießen und Aushärten des Zementmörtels "unter Wasser" stattfindet. In anderen Worten werden die Hohlräume der Offshore-Bauwerke mit dem erfindungsgemäßen Zementmörtel vergossen, während sie sich bereits im Wasser befinden und die Umgebung, in der der Zementmörtel aushärtet eine wässrige ist und nicht, wie sonst üblich, eine gasförmige.

Bei dem Zement kann es sich um jeglichen geeigneten Zement handeln. Im Allgemeinen wird darunter ein anorganischer, nicht metallischer und feingemahlener Baustoff verstanden, der als Bindemittel im Zementmörtel gemäß der vorliegenden Erfindung enthalten ist. Bei dem Zement im Sinne der vorliegenden Erfindung handelt es sich um sogenannten

Portlandzement, der dem Fachmann geläufig ist. Portlandzement weist als Hauptbestandteile Calcium, Silizium und Aluminium auf, und wird durch Sinterung dieser Stoffe und anschließendes Feinmahlen hergestellt. Bevorzugt weist der Portlandzement zumindest einen oder alle der nachfolgenden Bestandteile auf: ungefähr 58-66 % Calciumoxid, ungefähr 18-96 % Siliziumdioxid, ungefähr 4-10 % Aluminiumoxid und ungefähr 2-5 % Eisenoxid. Weiterhin weist der Portlandzement bevorzugt eine spezifische Oberfläche von ungefähr 2500-5000 cmm²/g auf. Am bevorzugtest handelt es sich bei den Portlandzement um einen CEM I-Portlandzement gemäß der Norm EN 197.

Die Verwendung von Portlandzement, der vorteilhafter Weise deutlich günstiger zu beschaffen ist als Polymerzement, zeigte hervorragende Ergebnisse bei der Herstellung und erfindungsgemäßen Verwendung des Zementmörtels.

Bei dem Anmachwasser im Sinne der vorliegenden Erfindung kann es sich um jegliches geeignetes Anmachwasser handeln, welches von Klarwasser, bzw. Süßwasser unterschiedlich ist. Das Anmachwasser weist eine Salinität von ≥ 0,1 % auf.

Besonders bevorzugt handelt es sich bei dem Anmachwasser um Salzwasser, noch bevorzugter um Meerwasser. Noch bevorzugter handelt es sich bei dem Anmachwasser um Meerwasser aus dem Atlantik (Salinität ungefähr 3,54 %), dem Pazifik (Salinität ungefähr 3,45 %), der Nordsee (Salinität ungefähr 3,2 % bis 3,5 %, in Flussmündungen 1,5 % bis 2,5 %), dem Mittelmeer (Salinität ungefähr 3,74 %), oder der Ostsee (Salinität ungefähr 0,8 %).

Unter dem Begriff der "Salinität" im Sinne der vorliegenden Erfindung soll der Salzgehalt des Wassers, bzw. des Anmachwasser verstanden werden, wobei ein Wert von 1 % einer Menge von 10 g Salz pro Kilogramm Wasser entspricht.

Das Anmachwasser weist bevorzugt eine Salinität im Bereich von ≥ 0,1 und ≤ 4 %, bevorzugter ≥ 0,8 % und ≤ 3,8 %, noch bevorzugter ≥ 1,5 % und ≤ 3,8 %, noch bevorzugter ≥ 2 % und ≤ 3,5 % auf.

Da das Anmachwasser bevorzugt Meerwasser ist und nicht aktiv temperiert werden muss, schwankt seine Temperatur abhängig von dem Meer, aus welchem das Anmachwasser entnommen wird, sowie von der Jahreszeit. Bevorzugt liegt die Temperatur des Anmachwassers bei ≤ 30 °C, bevorzugter in einem Bereich von ≥ 4 °C und ≤ 30 °C, noch bevorzugter in einem Bereich von ≥ 5 °C und ≤ 20 °C, weiter bevorzugt in einem Bereich von ≥ 5°C und ≤ 18 °C, und am bevorzugtesten bevorzugt in einem Bereich von ≥ 5 °C und ≤ 15 °C.

Unter dem Begriff "Zuschlagstoff" im Sinne der vorliegenden Erfindung wird ein Bestandteil des Zementmörtels verstanden, der kein primärer Funktionsträger, sondern ein Hilfsstoff ist. Es handelt sich bei dem Zuschlagstoff gemäß der Erfindung um einen siliziumhaltigen Zuschlagstoff.

Grundsätzlich kann der Zuschlagstoff eine Asche sein, die ausgewählt ist aus einer Gruppe von Aschen umfassend Reisschalenasche, glashaltige oder glasfaserhaltige Asche oder glaskugelhaltige Asche aus einer Reststoffverwertung, Asche aus der thermischen Verwertung von glasfaserverstärkten Kunststoffen und Asche aus der thermischen Verwertung von vorzerkleinerten Rotorblättern von Windkraftanlagen.

Überraschenderweise wurde gefunden, dass bei Einsatz eines solchen siliziumhaltigen Zuschlagstoffes die starke exotherme Reaktion des Portlandzements, insbesondere bei Kontakt mit dem salzhaltigen Anmachwasser, reduziert werden konnte. Weiterhin weist der siliziumhaltige Zuschlagstoff hervorragende wärmedämmende und wärmespeichernde Eigenschaften auf, so dass der Temperaturgradient zwischen Zementmörtel und umgebendem Meerwasser reduziert werden kann und es somit zu weniger thermischen Spannungen kommt.

Bevorzugt handelt es sich bei dem siliziumhaltigen Zuschlagstoff um eine Asche, beispielsweise Flugasche, oder - ganz bevorzugt - Reisschalenasche. Solche Aschen weisen häufig teilchenförmige oder faserförmige Strukturen auf. Insbesondere bei den faserförmigen Strukturen führt dies vorteilhafter Weise dazu, dass eine erhöhte Stabilität des ausgehärteten Zementmörtels erreicht wird.

Der Zuschlagstoff weist bevorzugt eine Struktur auf, die ausgewähltes aus der Gruppe bestehend aus faserförmige Struktur, Pulver und Granulat, wobei die faserförmige Struktur besonders bevorzugt ist. Ebenfalls bevorzugt ist die Granulatform (auch Pelletform), da hierdurch eine gute Verarbeitungsfähigkeit, sowie Verteilung des Zuschlagstoffes im erfindungsgemäßen Zementmörtel erreicht wird.

Bei dem siliziumhaltigen Zuschlagstoff handelt es sich entweder um einen organischen Zuschlagstoff oder um Asche aus der thermischen Verwertung glasfaserverstärkter Kunststoffe.

Der organische Zuschlagstoff ist biogener Natur und besonders bevorzugt ein pflanzlicher Zuschlagstoff.

Pflanzliche Zuschlagstoffe weisen vorteilhafter Weise häufig eine faserförmige Struktur auf. Dementsprechend handelt es sich bei pflanzlichen Zuschlagstoffen mit faserförmiger Struktur um besonders bevorzugte siliziumhaltige Zuschlagstoffe im Sinne der Erfindung.

Überraschenderweise wurde entdeckt, dass sich insbesondere Reisschalenasche hervorragend als Zuschlagstoff im Sinne der vorliegenden Erfindung eignet.

Reisschalenasche ist dem Fachmann bekannt und wird hauptsächlich in der Stahlindustrie verwendet, wo sie zur Isolierung von flüssigem Stahl gegen Temperaturverluste und zum Schutz gegen die Aufnahme von Sauerstoff dient. Vorteilhafterweise zeichnet sich Reisschalenasche insbesondere durch einen hohen Siliziumgehalt sowie eine faserförmige Struktur aus.

Reisschalenasche wird auch als biogene Kieselsäure bezeichnet. Zu ihrer Herstellung werden die das Korn umfassenden Reisschalen, auch Spelze genannt, in einer Reismühle vom Rohreis getrennt. Diese Schale wird dann beispielsweise als natürlich nachwachsender Rohstoff in modernen Biokraftwerken als Energieträger genutzt und bei dieser Verbrennung Reisschalenasche erzeugt.

Dementsprechend führt die Verwendung von Reisschalenasche als Zuschlagstoff im Sinne der vorliegenden Erfindung zu einem Zementmörtel, dessen exotherme Reaktion beim Abbinden abgeschwächt wird und bei dem die auftretenden thermischen Spannungen reduziert werden. Weiterhin ergab sich insbesondere aufgrund der faserförmigen Struktur der Reisschalenasche eine erhöhte Stabilität des ausgehärteten Zementmörtels.

Bevorzugt weist die Reisschalenasche gemäß der vorliegenden Erfindung einen SiO₂-Anteil von ≥ 75 %, bevorzugter ≥ 85 %, noch bevorzugter ≥ 90 %, oder gar ≥ 92 %, auf.

Das Schüttgewicht der Reisschalenasche liegt weiterhin bevorzugt im Bereich von ungefähr ≥ 150 kg/m³ und ungefähr ≤ 500 kg/m³. Besonders bevorzugt liegt das Schüttgewicht der Reisschalenasche in einem Bereich von ≥ 300 kg/m³ und ungefähr ≤ 500 kg/m³.

Die Asche aus der thermischen Verwertung von glasfaserverstärkten Kunststoffen eignet sich als Zuschlagstoff, da diese Asche einen hohen Anteil an Glas/Silizium enthält. Nach geläufiger Definition ist Asche ist ein fester Rückstand aus der Verbrennung organischen Materials, also von fossilen Brennstoffen, sonstigen Reststoffen, Biokraftstoffen oder Lebewesen wie Pflanzen und Tieren Sie entsteht aus dem anorganischen Teil der verbrannten Substanz und besteht somit aus Mineralstoffen oder anderen nicht thermisch umsetzbaren anorganischen Reststoffen wie beispielsweise Si02. Glasfaserverstärkte Kunststoffe besitzen in der Regel einen nennenswerten Anteil an Glasfasern, die bei Verbrennung bzw. thermischer Umsetzung einen wesentlichen Teil der Asche ausmachen.

Bevorzugt liegt der Zuschlagstoff in einer Menge von ≥ 5 und ≤ 40 Gew.-%, besonders bevorzugt in einer Menge von ≥ 10 und ≤ 20 Gew.-%, im erfindungsgemäßen Zementmörtel vor. Im Falle von Reisschalenasche liegt der Zuschlagstoff bevorzugt in einer Menge von ≥ 15 und ≤ 20 Gew.-%, noch bevorzugter in einer Menge von ≥ 10 und ≤ 15 Gew.-% vor.

Ein weiterer Aspekt der vorliegenden Erfindung bezieht sich auf ein Offshore-Bauwerk, welches einen Zementmörtel der vorliegenden Erfindung aufweist. Bevorzugt handelt es sich bei dem Offshore-Bauwerk um eine Offshore-Windkraftanlage. Ebenfalls bevorzugt befindet sich der Zementmörtels hierbei in einem Teil des Offshore-Bauwerks, welches unterhalb der Wasseroberfläche angeordnet ist, bevorzugter in der unterhalb der Wasseroberfläche befindlichen Gründungsstruktur des Offshore-Bauwerks, noch bevorzugter in einem ehemaligen Hohlraum dieser Gründungsstruktur.

Ein weiterer Aspekt der vorliegenden Erfindung bezieht sich auf die Verwendung der erfindungsgemäßen Zementmörtel für das Vergießen von unter der Wasseroberfläche befindlichen Hohlräumen. Wie bereits zuvor ausgeführt handelt es sich bei den Hohlräumen bevorzugt um Hohlräume eines Offshore-Bauwerks, welche unterhalb der Wasseroberfläche angeordnet sind, noch bevorzugter handelt es sich hierbei um einen Hohlraum in der Gründungsstruktur solcher Offshore-Bauwerke.

Ein weiterer Aspekt der vorliegenden Erfindung bezieht sich auf die Verwendung der erfindungsgemäßen Zementmörtel für die Wärmeisolation. Aufgrund der vorteilhaften wärmedämmenden und/oder wärmespeichernden Eigenschaften des erfindungsgemäßen Zementmörtels kann dieser ebenfalls als Isolationsschicht Verwendung finden.

Hierbei wird dieser bevorzugt auf zumindest einen Bereich der Außenseite eines Bauteils des Offshore-Bauwerks aufgetragen, besonders bevorzugt mittels einer Pumpe aufgespritzt, und isoliert dann nach Absenkung dieses Bauteils unter die Wasseroberfläche das Bauteil thermisch gegenüber dem umgebenden, kälteren Meerwasser. Bevorzugt handelt es sich bei dem Bauteil des Offshore-Bauwerks um ein Bauteil in dem ein Hohlraum mittels eines Zementmörtels, bevorzugt mittels des erfindungsgemäßen Zementmörtels, vergossen werden soll. Noch bevorzugter handelt es sich bei dem Bauteil um ein Bauteil der Gründungsstruktur, am bevorzugten um einen Gründungspfahl, des Offshore-Bauwerks.

Bevorzugt wird der erfindungsgemäße Zementmörtels hierbei für die Wärmeisolation von Bauteilen eines Offshore-Bauwerks eingesetzt, noch bevorzugter für Bauteile der Gründungsstruktur eines solchen Offshore Bauwerks. Besonders bevorzugt handelt es sich bei solchen Bauteilen um die Gründungspfähle eines Offshore-Bauwerks.

Ein weiterer Aspekt der vorliegenden Erfindung betrifft ein Verfahren, ches die Schritte umfasst: Vermischen eines Zements mit einem siliziumhaltigen Zuschlagstoff, sowie Anmachwasser mit einer Salinität von ≥ 0,1 % in ausreichender Menge zur Herstellung des erfindungsgemäßen Zementmörtels; und Verbringen dieses Zementmörtels in einen unter der Wasseroberfläche befindlichen Hohlraum zum Vergießen dieses Hohlraums.

Bevorzugt wird die Vermischung des Zements mit dem siliziumhaltigen Zuschlagstoff und/oder dem Anmachwasser mittels eines Tellermischer durchgeführt. Bevorzugter handelt es sich bei dem Anmachwasser um Meerwasser des Meeres, in welchem das Offshore-Bauwerk gegründet wird. Vorteilhafter Weise muss somit das Anmachwasser nicht an die Stelle der Gründung des Offshore-Bauwerks transportiert werden.

Noch bevorzugter wird das Anmachwasser dem Meer an der Stelle, an der das Offshore-Bauwerk gegründet werden soll, entnommen. Weiter bevorzugt erfolgt diese Entnahme des Meerwassers zeitlich im Wesentlichen unmittelbar vor der Gründung des Offshore-Bauwerks.

Bevorzugt wird das Anmachwasser dem Meer mittels einer Pumpe entnommen. Weiter bevorzugt erfolgt die Verbringung des hergestellten Zementmörtels in den unter der Wasseroberfläche befindlichen Hohlraum mittels einer Pumpe. Besonders bevorzugt handelt es sich bei der Pumpe zur Entnahme des Anmachwassers aus dem Meer und der Pumpe zur Verbringung des hergestellten Zementmörtels in den Hohlraum um dieselbe Pumpe.

Ein weiterer Aspekt der vorliegenden Erfindung betrifft ein Verfahren zur Wärmeisolation von Bauteilen eines Offshore-Bauwerks umfassend die Schritte: Vermischen eines Zements mit einem siliziumhaltigen Zuschlagstoff, sowie Anmachwasser mit einer Salinität von ≥ 0,1 % in ausreichender Menge zur Herstellung des erfindungsgemäßen Zementmörtels; und Aufbringen des Zementmörtels auf ein Bauteil eines Offshore-Bauwerks zur Wärmeisolation dieses Offshore-Bauwerks. Bevorzugt wird hierbei der Zementmörtel auf zumindest einen Teil der Außenseite eines Gründungspfahls des Offshore-Bauwerks aufgebracht.

Bevorzugt wird das Anmachwasser dem Meer mittels einer Pumpe entnommen. Weiter bevorzugt erfolgt die Aufbringung des hergestellten Zementmörtels auf das Bauteil des Offshore-Bauwerks mittels einer Pumpe. Besonders bevorzugt handelt es sich bei der Pumpe zur Entnahme des Anmachwassers aus dem Meer und der Pumpe zur Aufbringung des hergestellten Zementmörtels um dieselbe Pumpe.

Ein weiterer, nicht beanspruchter Gesichtspunkt der vorliegenden Erfindung betrifft die Herstellung eines siliziumhaltigen Zuschlagstoffs umfassend das Zerkleinern und Verbrennen von Rotorblättern von Windkraftanlagen auf der Basis von glasfaserverstärktem Kunststoff. Aus dieser Verbrennung resultiert eine siliziumhaltige Asche, die alle vorstehend erwähnten Vorzüge als Zuschlagstoff aufweist.

Rotorblätter von Windkraftanlagen bestehen in der Regel aus ca. 20 Gewichtsprozent Epoxidharz , 60 Gewichtsprozent Glasfaser und aus 20 Gewichtsprozent anderer Stoffe wie Stahl Kupfer und Holz. Epoxidharze gehören zu der Gruppe der duroplastischen Kunststoffe und sind als organische Substanzen bei einer Verbrennung vollständig thermisch umsetzbar. In der Asche verbleiben die Glasfaser und die metallenen Bestandteile der Rotorblätter sowie gegebenenfalls die mineralischen Bestandteile des Holzes. Das Verfahren gemäß der Erfindung kann eine Aufbereitung der Asche umfassen. Beispielsweise kann vorgesehen sein, dass die metallenen Bestandteile ausgehalten werden. Die in der Asche enthaltene Glasfaser kann in Form von Kurzfasern oder sogenannten "Microbeads" vorliegen.

Die zuvor beschrieben einzelnen Ausführungsformen der Erfindung sind frei miteinander kombinierbar, solange nicht explizit etwas Gegenteiliges ausgeführt wurde, oder ein offensichtlicher Ausschluss entgegensteht.

Weitere Vorteile, Einzelheiten und Merkmale der Erfindung ergeben sich nachfolgend aus den erläuterten Ausführungsbeispielen.

Zur Errichtung einer Offshore-Windkraftanlage in der Nordsee muss diese mittels einer Gründungsstruktur im Meeresgrund verankert werden. Diese Gründungsstruktur ist daher nach ihrer Installation unterhalb der Wasseroberfläche angeordnet.

Die Gründungsstruktur besteht aus unterschiedlichen Bauteilen, die bevorzugt mittels Gründungspfählen im Meeresgrund verankert werden und die teilweise mittels des erfindungsgemäßen Zementmörtels, d.h. einer unter Wasser hydraulisch abbindende Vergussmasse (auch als "Grout" bezeichnet) miteinander verbunden werden.

Die Bauteile der Gründungsstruktur, sowie die Komponenten des erfindungsgemäßen Zementmörtels werden bevorzugt mittels eines Schiffs an die Stelle der geplanten Errichtung der Offshore-Windkraftanlage befördert.

An dieser Stelle angekommen, werden dann die Komponenten des erfindungsgemäßen Zementmörtels, nämlich Portlandzement, Anmachwasser, sowie Reisschalenasche mit faserförmiger Struktur mittels eines Tellermischers, der sich ebenfalls an Bord des Schiffes befindet, miteinander vermischt, um den erfindungsgemäßen Zementmörtels herzustellen.

Der Zementmörtel kann alternativ auch vorab mit der Reisschalenasche in einem bestimmten Verhältnis vorgemischt werden. Idealerweise befindet sich dann z.B. 1 t Portland Zement im BIG BAG und wird zunächst trocken mit der entsprechenden Menge Reisschalenasche vorgemischt. Danach wird diese Mischung vor Ort mit einer Wassermenge von ca. 300 - 400 Ltr. Wasser zur Reaktion gebracht.

Hierbei wird als Anmachwasser das umgebende Meerwasser mittels einer Pumpe dem Meer entnommen. Das Anmachwasser weist daher eine Salinität von ungefähr 3 %, sowie eine Temperatur von ungefähr 5 - 15 °C auf.

Der so hergestellte Zementmörtel wird dann mittels einer Pumpe aus dem Tellermischer gefördert und auf die Gründungspfähle der Gründungsstruktur der Offshore-Windkraftanlage aufgebracht. Hierbei wird der Zementmörtel bevorzugt auf diejenigen außenliegenden Bereiche der Gründungspfähle aufgebracht, die nach Absenkung derselben unter die Wasseroberfläche mit dem umgebenden Meerwasser in Kontakt kommen. Hierdurch wird eine Wärmeisolation erreicht, die das Auftreten von thermischen Spannungen im Zementmörtel, der für das Vergießen von Hohlräumen in der Gründungsstruktur verwendet wurde reduziert.

Nach dem Absenken der einzelnen Bauteile der Gründungsstruktur müssen diese mittels einer Vergussmasse miteinander verbunden werden. Dies erfolgt durch das Vergießen von Hohlräumen, die zwischen den Bauteilen der Gründungsstruktur bestehen, mittels des erfindungsgemäßen Zementmörtels. Zu diesem Zweck wird der an Bord des Schiffes hergestellte Zementmörtel ebenfalls mittels einer Pumpe aus dem Tellermischer in die unter der Wasseroberfläche befindlichen Hohlräume in der Gründungsstruktur der Offshore-Windkraftanlage verbracht, d.h. in diese eingespritzt.

Mit dem hydraulischen Abbinden, d.h. dem Aushärten des in den ehemaligen Hohlräumen der Gründungsstruktur befindlichen erfindungsgemäßen Zementmörtels, wird so eine stabile und standfeste Gründungsstruktur geschaffen, die das Fundament für den Aufbau der weiteren Komponenten der Offshore-Windkraftanlage bietet.

## Patentansprüche

1. Zementmörtel für das Vergießen von unter der Wasseroberfläche befindlichen Hohlräumen bestehend aus:
einem Zement, Anmachwasser, das eine Salinität von ≥ 0,1 % aufweist, sowie einem siliziumhaltigen Zuschlagsstoff,
**dadurch gekennzeichnet, dass**
der Zuschlagstoff eine Asche aus der thermischen Verwertung von glasfaserverstärkten Kunststoffen oder ein organischer Zuschlagstoff biogener Natur ist und der Zement ein Portlandzement ist.

2. Zementmörtel nach Anspruch 1, wobei das Anmachwasser Meerwasser ist.

3. Zementmörtel nach einem der vorstehenden Ansprüche, wobei das Anmachwasser eine Salinität im Bereich von ≥ 0,1 % und ≤ 4 %, bevorzugt ≥ 0,8 % und ≤ 3,8 %, noch bevorzugter ≥ 1,5 % und ≤ 3,8 %, noch bevorzugter ≥ 2 % und ≤ 3,5 % aufweist.

4. Zementmörtel nach einem der vorstehenden Ansprüche, wobei der Zuschlagstoff eine Struktur aufweist, die ausgewählt ist aus der Gruppe bestehend aus faserförmiger Struktur, Pulver und Granulat.

5. Zementmörtel nach einem der vorstehenden Ansprüche, wobei der Zuschlagstoff in einer Menge von ≥ 5 und ≤ 40 Gew.-% vorliegt.

6. Offshore-Bauwerk umfassend einen Zementmörtel nach einem der vorstehenden Ansprüche.

7. Verwendung eines Zementmörtels nach zumindest einem der Ansprüche 1-5 für das Vergießen von unter der Wasseroberfläche befindlichen Hohlräumen.

8. Verwendung eines Zementmörtels zumindest nach einem der vorstehenden Ansprüche 1 - 5 zur Wärmeisolation.

9. Verfahren, umfassend die Schritte:
Vermischen eines Zements mit einem siliziumhaltigen Zuschlagstoff, sowie Anmachwasser mit einer Salinität von ≥ 0,1 % in ausreichender Menge zur Herstellung eines Zementmörtels nach zumindest einem der Ansprüche 1-5; und
Verbringen des Zementmörtels in einen unter der Wasseroberfläche befindlichen Hohlraum zum Vergießen dieses Hohlraums oder Aufbringen des Zementmörtels auf ein Bauteil eines Offshore-Bauwerks zur Wärmeisolation dieses Offshore-Bauwerks.

## Claims

1. Cement mortar for casting of cavities under the water surface consisting of:
a cement,
mixing water with a salinity of ≥ 0.1 %, and
a silicon-containing aggregate,
**characterised in that**
the aggregate is an ash from the thermal recycling of glass fibre reinforced plastics or an organic aggregate of biogenic nature and the cement is a Portland cement.

2. Cement mortar according to claim 1, wherein the mixing water is sea water.

3. Cement mortar according to one of the preceding claims, wherein the mixing water has a salinity in the range of ≥ 0.1 % and ≤ 4%, preferably ≥ 0.8% and ≤ 3.8%, even more preferably ≥ 1.5% and ≤ 3.8%, even more preferably ≥ 2% and ≤ 3.5%.

4. Cement mortar according to any of the preceding claims, wherein the aggregate comprises a structure selected from the group consisting of fibrous structure, powder and granules.

5. Cement mortar according to any of the preceding claims, wherein the aggregate is present in an amount of ≥ 5 and ≤ 40% by weight.

6. Offshore construction comprising a cement mortar according to any of the preceding claims.

7. Use of a cement mortar according to at least one of the preceding claims 1-5 for the grouting of cavities located below the water surface.

8. Use of a cement mortar according to at least one of the preceding claims 1-5 for thermal insulation.

9. Method comprising the steps:
mixing a cement with a silicon-containing aggregate as well as mixing water with a salinity of ≥ 0.1% in sufficient quantity to produce a cement mortar according to at least one of the preceding claims 1-5; and
placing the cement mortar in a cavity located below the water surface for grouting this cavity or applying the cement mortar to a component of an offshore construction for the thermal insulation of this offshore construction.

## Revendications

1. Mortier de ciment destiné au scellement de cavités situées sous la surface de l'eau, constitué :
d'un ciment,
d'eau de gâchage présentant une salinité ≥ 0,1 %, et
d'un granulat contenant du silicium,
**caractérisé en ce que**
le granulat est une cendre issue de la valorisation thermique de plastiques renforcés par des fibres de verre ou un granulat organique biogène, et **en ce que** le ciment est un ciment Portland.

2. Mortier de ciment selon la revendication 1, dans lequel l'eau de gâchage est de l'eau de mer.

3. Mortier de ciment selon l'une des revendications précédentes, dans lequel l'eau de gâchage présente une salinité dans la plage ≥ 0,1 % et ≤ 4 %, de préférence ≥ 0,8 % et ≤ 3,8 %, plus préférablement ≥ 1,5 % et ≤ 3,8 %, plus préférablement ≥ 2 % et ≤ 3,5 %.

4. Mortier de ciment selon l'une des revendications précédentes, dans lequel le granulat présente une structure choisie dans le groupe constitué par une structure fibreuse, une poudre et des granulés.

5. Mortier de ciment selon l'une des revendications précédentes, dans lequel le granulat est présent en une quantité ≥ 5 et ≤ 40 % en poids.

6. Ouvrage en mer comprenant un mortier de ciment selon l'une des revendications précédentes.

7. Utilisation d'un mortier de ciment selon au moins l'une des revendications 1 à 5 pour le scellement de cavités situées sous la surface de l'eau.

8. Utilisation d'un mortier de ciment au moins selon l'une des revendications 1 à 5 précédentes pour l'isolation thermique.

9. Procédé comprenant les étapes :
de mélange d'un ciment avec un granulat contenant du silicium, ainsi qu'avec de l'eau de gâchage ayant une salinité ≥ 0,1 % en quantité suffisante pour produire un mortier de ciment selon au moins l'une des revendications 1 à 5 ; et
d'introduction du mortier de ciment dans une cavité située sous la surface de l'eau pour le scellement de cette cavité, ou d'application du mortier de ciment sur un composant d'un ouvrage en mer pour l'isolation thermique de cet ouvrage en mer.
